# EUROPÄISCHE PATENTSCHRIFT

(11) **EP 2 088 722 B1**
(45) Veröffentlichungstag und Bekanntmachung des Hinweises auf die Patenterteilung: **25.03.2015**
(21) Anmeldenummer: 08020786.3
(22) Anmeldetag: 29.11.2008
(51) Int. Cl.: H04L 12/701, H04L 12/703, H04L 12/707, H04L 12/751

(54) **Verfahren zur Datenübertragung und Netzwerk zur Duchführung**
Method for transferring data and network for executing same
Procédé de transmission de données et réseau destiné à son exécution

(30) Priorität: 05.02.2008 DE 102008008036
(43) Veröffentlichungstag der Anmeldung: 12.08.2009
(73) Patentinhaber: Deutsche Telekom AG, 53113 Bonn (DE)
(72) Erfinder: Stöttinger, Klaus Holger, 65205 Wiesbaden (DE); Grund, Norbert, 55120 Mainz (DE); Osterkrüger, Jens Gerhard, 22549 Hamburg (DE)
(74) Vertreter: Nern, Peter-Michael

(56) Entgegenhaltungen:
- WO-A-2005/011217
- US-A1- 2003 189 930
- US-A1- 2007 280 102
- US-B1- 7 227 872

## Beschreibung

Die Erfindung betrifft ein Verfahren zum Übertragen von Daten in einem Netzwerk über paketvermittelte Ende-zu-Ende-Verbindungen. Sie bezieht sich ferner auf ein Netzwerk zur Durchführung des Verfahrens, wobei das entsprechende Netzwerk gemäß einer Ausbildungsform der Erfindung an Bord eines Schiffes implementiert ist.

Die Übertragung beziehungsweise der Bezug von Informationen in Form von Daten erfolgt in der heutigen Zeit häufig über Netzwerke, über welche die die Daten miteinander austauschenden Einrichtungen und Systeme miteinander verbunden sind. Das wohl komplexeste Netzwerk ist das Internet, bei welchem es sich hinsichtlich der einbezogenen Komponenten zwar nicht um ein starres Netz mit fester Ausprägung und räumlicher Ausdehnung handelt, sondern um einen losen Rechnerverbund, welches aber in Form so genannter Backbones zumindest Kernbereiche mit einer relativ festen Struktur aufweist.

Neben Wide-Area-Networks (WAN), wie dem Internet, sind kleinere und lokal ausgebildete sowie angeordnete Netzwerke, das heißt Local-Area-Networks (LAN) mit einer grundsätzlich vergleichbaren Struktur bekannt. Auch bei lokalen Netzwerken lassen sich, insbesondere bei entsprechender Größe, Kernbereiche des Netzwerks und Zugriffsbereiche voneinander unterscheiden. So spricht man beispielsweise bei einem in einem mehrgeschossigen Gebäude implementierten LAN im Zusammenhang mit den die einzelnen Etagen miteinander verbindenden Einheiten und deren Verbindung untereinander ebenfalls von einem Backbone (Etagenbackbone). Auch unterschiedliche Einheiten technischer Systeme, wie Flugzeuge, Kraftfahrzeuge oder Schiffe, sind heutzutage häufig miteinander vernetzt, das heißt Bestandteil mehr oder weniger komplexer Netzwerke.

Bei den heute verwendeten Netzwerken handelt es sich zumeist um IP-basierte Netzwerke. Ein typisches IP-Netzwerk besteht aus den über das Netzwerk miteinander kommunizierenden Netzwerkendeinrichtungen und einer Mehrzahl von Switches und/oder Routern. Die Datenübertragung erfolgt in IP Netzwerken, anders als im Telefonfestnetz, paketvermittelt und somit nicht leitungsvermittelt. Dabei werden zu übertragende Dateien oder Datenströme in Datenblöcke mit einem durch das jeweils verwendete Übertragungsprotokoll festgelegten Format unterteilt und über die Switches oder Router von einer die Daten aussendenden Netzwerkendeinrichtung zu einer sie empfangenden Netzwerkendeinrichtung übertragen. Anhand einer die jeweils empfangende Netzwerkendeinrichtung bezeichnenden Zieladresse werden die Datenpakete durch die Switches und

Router der für den Empfang vorgesehenen Endeinrichtung zugeleitet.

Zur Sicherstellung einer hohen Verfügbarkeit der Netzwerke ist es bekannt, in einem Kernbereich eines Netzwerks eine redundante Zahl von Switches beziehungsweise Routern vorzusehen. Die Switches beziehungsweise Router bestimmen den Weg der Datenpakete durch das Netzwerk anhand einer Routingtabelle, in welcher sie die jeweils umgebende Netzwerkstruktur mit benachbarten Routern beziehungsweise Switches abbilden. Sofern dabei auf dem für ein Datenpaket vorgesehenen Weg durch das Netzwerk eine Störung durch den Ausfall einer oder mehrerer Komponenten oder durch eine temporäre Überlast auftritt, erfolgt nach einer vorgegebenen Zeitspanne (Time-out), innerhalb welcher ein Datenpaket nicht weitergeleitet werden kann, die Bestimmung eines neuen möglichen Weges unter Nutzung der redundanten Switches oder Router. Eine entsprechende Lösung wird beispielsweise durch die US 2007/280102 A1 beschrieben. Die dargestellte Lösung bezieht sich auf ein Kernnetz mit mehreren Kernvermittlungsrechnern beziehungsweise Routern, bei welchem zumindest die Router im Randbereich des Kernnetzes, so genannte Edge-Router redundant ausgebildet sind. Hierdurch ist es möglich, im Falle des Ausfalls eines der Edge-Router oder von Störungen in den über einen solchen Edge-Router geführten Signalzweigen für Nutzdaten den Pfad durch das Kernnetz unter Nutzung eines anderen Edge-Routers umzuschalten. Der Kern der Lösung nach der genannten US-Schrift besteht dabei darin, ein Verfahrensregime bereitzustellen, durch welches das Umschalten zwischen einem ersten Pfad zur Übertragung der Nutzdaten und einem im Falle des Auftretens von Störungen in dem ersten Pfad zu nutzenden alternativen Pfad durch das Kernnetz beschleunigt wird. Demgemäß wird vorgeschlagen, einen möglichen alternativen Pfad ständig, das heißt auch bei funktionierendem ersten Pfad zu etablieren, aber in dem alternativen Pfad zunächst keine Übertragungsbandbreite für die über den ersten Pfad übertragenen Nutzdaten zu reservieren. Erst im Falle einer Störung in dem ersten Pfad wird dann der alternative Pfad durch Reservierung entsprechender Bandbreite gewissermaßen tatsächlich aktiviert. In jedem Falle wird dabei aber jedes Datenpaket einer Datei oder eines Datenstroms mit Nutzdaten über mehrere Router des dargestellten Kernnetzes geführt. Die Verwendung eines alternativen, durch redundante Einheiten realisierten Weges erfolgt (ebenso wie bei der zuvor beschriebenen Lösung, auch nach anderen gängigen Netzwerkkonzepten nur im Falle des Ausfalls des ursprünglich für die Datenübertragung vorgesehenen Weges durch das Netzwerk. So kann durch die Anordnung redundanter Einheiten zwar die Verfügbarkeit des Netzwerks erhöht werden, jedoch kann sich der einzelne Verbindungsweg durch das Netzwerk trotz Verwendung hochfrequenter Übertragungspfade, wie sie beispielsweise durch die Glasfasertechnik und hochleistungsfähige Kernvermittlungsrechner (Switches oder Router) zur Verfügung gestellt werden, bei einem hohen Datenaufkommen als Flaschenhals erweisen. Zudem weisen bekannte Netzwerkkonzepte den Nachteil auf, dass im Falle auftretender Störungen die zum Umschalten des Signalweges unter Verwendung der redundanten Komponenten benötigte Zeit vergleichsweise hoch ist, wenn auch hier durch die Lösung nach der US 2007/280102 A1 ein Verbesserung gegeben ist. So kann beispielsweise die Umschaltzeit im Internet bis zu 60 Sekunden betragen. Dies ist zwar in vielen Fällen unproblematisch, aber für zeitkritische Anwendungen nicht hinnehmbar. Beispielsweise für Netzwerke, über welche technische Komponenten eines Kraftfahrzeugs miteinander vernetzt sind, werden im Falle auftretender Störungen deutlich kürzere Umschaltzeiten benötigt und angestrebt. Entsprechendes gilt erst recht für noch komplexere Systeme, wie Hochseeschiffe oder Marineschiffe, insbesondere dann, wenn diese gegebenenfalls Bestandteile militärischer Sicherungssysteme sind. So wird beispielsweise für schwimmende Kampfeinheiten eine Umschaltzeit von weniger als 2 Sekunden für das Umschalten von einem gestörten Übertragungsweg auf einen redundanten Übertragungsweg bezüglich einer Schicht-4-Ende-zu Ende-Verbindung gefordert. Andererseits ist nach dem Stand der Technik die Situation zu verzeichnen, dass insbesondere auf großen Schiffen häufig, Insellösungen mehrerer voneinander unabhängiger IT-Systeme existieren. Jedoch wären auch hier Lösungen wünschenswert bei denen die IT-Systeme in einem übergreifenden Netzwerk mit gemeinsamen aber teilweise auch unterschiedlichen Daten arbeiten.

Aufgabe der Erfindung ist es, eine Lösung bereitzustellen, durch welche eine hohe Verfügbarkeit und Performance bei der Datenübertragung gewährleistet wird. Insbesondere soll bei auftrelenden Ausfällen oder Störungen in einem zum Übertragung von Nutzdaten verwendeten Übertragungsweg beziehungsweise Pfad ein nach schnelleres Umschalten auf einen redundanten Übertragungsweg ermöglicht werden. Hierzu sind ein Verfahren und der Aufbau eines entsprechenden Netzwerks anzugeben.

Die Aufgabe wird durch ein Verfahren mit den Merkmalen des Hauptanspruchs gelöst. Ein die Aufgabe lösendes zur Durchführung des Verfahrens geeignetes Netzwerk ist durch den ersten Sachanspruch charakterisiert. Vorteilhafte Ausbeziehungsweise Weiterbildungen der Erfindung sind durch die Unteransprüche gelöst.

Das zur Lösung der Aufgabe vorgeschlagene Verfahren zur Übertragung von Daten in einem Netzwerk bezieht sich auf ein Verfahren, bei dem die Daten über paketvermittelte Ende-zu-Ende-Verbindungen übertragen werden. Danach werden Nutzdaten, welche eine Datei oder einen Datenstrom repräsentieren, in Form von Datenpaketen über das Netzwerk übertragen. Sie werden dabei von einer die Nutzdaten aussendenden Endeinrichtung des mehrere Endeinrichtungen umfassenden Netzwerks über ein Kernnetz mit mindestens zwei als Hochleistungseinheiten ausgebildeten Kernvermittlungsrechnern zu einer anderen, die Nutzdaten empfangenden Endeinrichtung übertragen. Bei den vorgenannten Endeinrichtungen des Netzwerks handelt es sich im Kontext der Darstellung der Erfindung jeweils entweder um ein netzwerkfähiges Endgerät oder um ein weiteres Netzwerk, welches in Bezug auf das im Rahmen der Darstellung der Erfindung betrachtete beziehungsweise das erfindungsgemäße Netzwerk mit dem Kernnetz als Subnetz anzusehen ist. Die Datenpakete einer Datei oder eines Datenstroms werden über die Kernvermittlungsrechner und einen von diesen bestimmten Weg durch das Netzwerk der jeweils zum Empfang der Nutzdaten vorgesehenen Endeinrichtung zugeleitet. Dabei wird der Weg durch das Netzwerk von den Kernvermittlungsrechnern in grundsätzlich bekannter Weise anhand einer in einem jeweiligen Datenpaket enthaltenen, die empfangende Endeinrichtung der betreffenden Ende-zu-Ende-Verbindung bezeichnenden Zieladresse bestimmt. Ferner tauschen alle Kernvermittlungsrechner ständig Betriebsdaten untereinander aus, welche zumindest ihre jeweils aktuellen dynamischen Routingtabellen umfassen.

Erfindungsgemäß werden die Nutzdaten einer Datei oder eines Datenstroms über einen oder mehrere der mindestens zwei Kernvermittlungsrechner des Kernnetzes geführt, wobei aber jedes Datenpaket dieser Daten jeweils nur einen der Kernvermittlungsrechner passiert. Dazu werden erfindungsgemäß alle zum Netzwerk gehörenden Endeinrichtungen redundant an alle Kernvermittlungsrechner angebunden. Die Übertragung von Daten über das Kernnetz geschicht dabei erfindungsgemäß in der Weise, dass über die, die Kernvermittlungsrechner untereinander vermaschen den Verbindungen nur Betriebsdaten, wie Routingtabellen, jedoch keine Nutzdaten ausgetauscht werden.

Während nach dem Stand der Technik in Netzwerken bekannter Architektur die Nutzdaten von einer als Quelle fungierenden Endeinrichtung, gegebenenfalls unter Zwischenschaltung eines Quell-Access-Switches, zunächst über einen Quell-Core-Router, gegebenenfalls weitere Core-Router und schließlich über einen Ziel-Core-Router, gegebenenfalls wiederum unter Zwischenschaltung eines Ziel-Access-Switches, also mithin in jedem Falle über mehrere Core-Router der als Ziel vorgesehenen Endeinrichtung zugeführt werden, werden die Datenpakete nach dem erfindungsgemäßen Verfahren jeweils nur über einen Kernvermittlungsrechner (Core-Router oder Layer-3-Switch) geführt. Voraussetzung hierfür ist die unmittelbare oder mittelbare Anbindung aller Endeinrichtungen des Netzwerks an alle Kernvermittlungsrechner. Vorteilhafterweise resultieren daraus kürzere Übertragungswege, so dass sich die Datenübertragungsrate erhöht. Durch den zwischen den Kernvermittlungseinrichtungen ständig erfolgenden Austausch von Betriebsdaten, insbesondere der Routingtabellen, ist zudem im Falle eines Ausfalls eines gewählten Übertragungsweges ein sehr schnelles Umschalten auf einen anderen der redundanten Datenwege möglich.

Das erfindungsgemäße Verfahren ist vorteilhaft so ausgestaltet, dass der gesamte im Netzwerk aus der Übertragung von Nutzdaten resultierende Datenverkehr dynamisch auf die Kernvermittlungsrechner aufgeteilt wird. Die Aufteilung des Datenverkehrs wird dabei durch Einheiten an oder in den jeweils Nutzdaten aussendenden Endeinrichtungen gesteuert. Vorzugsweise geschieht dies nach dem Prinzip des Load-Balancing mittels einer dazu von den betreffenden Einheiten verarbeiteten Software-Routine.

Das Verfahren kann außerdem dadurch weitergebildet sein, dass die Daten, in Abhängigkeit ihrer Art, durch die Kernvermittlungsrechner mit unterschiedlicher Priorität weitergeleitet werden. Dabei erfolgt die Priorisierung vorzugsweise auf der Grundlage bekannter Quality-of-Service-Mechanismen, so dass die unterschiedliche Priorisierung von Daten gegebenenfalls auch nur bei unzureichender Dienstgüte zum Tragen kommt.

Eine weitere mögliche Ausgestaltung des erfindungsgemäßen Verfahrens, bei welchem innerhalb eines technischen Systems Subnetze mit Komponenten unterschiedlicher Systembereiche als Endeinrichtung an die Kernvermittlungsrechner des Netzwerks angebunden sind, ist dadurch gegeben, dass die Daten in dem Netzwerk über gleiche physikalische Wege, aber voneinander logisch getrennt übertragen werden. Hierfür werden in dem Netzwerk virtuelle Netze definiert, welche den unterschiedlichen Systembereichen zugeordnet werden. Das erfindungsgemäße Verfahren kann zudem vorteilhaft dadurch weitergebildet sein, dass die Daten im gesamten Netzwerk oder zwischen ausgewählten virtuellen Netzen, gemäß der zuvor erläuterten Ausbildungsform, verschlüsselt übertragen werden.

Das zur Lösung der Aufgabe und zur Durchführung des erfindungsgemäßen Verfahrens ausgebildete Netzwerk zur paketvermittelten Übertragung von Daten über Ende-zu-Ende-Verbindungen besteht aus einem Kernnetz mit mindestens zwei als Hochleistungseinheiten ausgebildeten Kernvermittlungsrechnern, einem das Kernnetz umgebenden Zugriffsbereich und einer Mehrzahl über den Zugriffsbereich an die Kernvermittlungsrechner des Kernnetzes angebundenen Endeinrichtungen. In diesem Kontext bezieht sich die Charakterisierung der Kernvermittlungsrechner als Hochleistungseinheiten darauf, dass die Datenübertragungsrate im Kernnetz und so auch in den Kernvermittlungsrechnern höher ist (vorzugsweise um eine Zehnerpotenz oder mehr), als in den umgebenden Netzwerkbereichen beziehungsweise in den Zugriffsbereichen. Dies ist auch bei Netzwerken des Standes der Technik so, wobei hier gegenwärtig zumeist Übertragungsraten von ca. 10 GBit/s im Kernnetz anzutreffen sind.

Wie bereits im Zusammenhang mit dem Verfahren dargestellt, handelt es sich bei den Endeinrichtungen jeweils um ein netzwerkfähiges Endgerät oder um ein Subnetz. Erfindungsgemäß ist das Netzwerk so ausgebildet, dass jede Endeinrichtung, zumindest während des Bestehens einer sie einbeziehenden Ende-zu-Ende-Verbindung, an alle Kernvermittlungsrechner des Kernnetzes angebunden ist. Ferner sind alle Kernvermittlungsrechner untereinander vermascht, wobei zwischen ihnen eine oder mehrere, ausschließlich dem Austausch von Betriebsdaten, insbesondere der aktuellen dynamischen Routingtabellen, dienende hochperformante Verbindungen bestehen.

Bei den bereits wiederholt angesprochenen Kernvermittlungsrechnern handelt es sich gemäß einer möglichen Ausgestaltungsform des erfindungsgemäßen Netzwerks um Layer-3-Switches. Darüber hinaus ist es aber ebenso möglich, die Kernvermittlungsrechner durch Core-Router zu realisieren. Selbstverständlich sind auch Konstellationen denkbar, bei denen sowohl Layer-3-Switches als auch Core-Rechner zum Einsatz gelangen. Unabhängig von ihrer Art sind die Kernvermittlungsrechner vorzugsweise mit einer Firewall ausgestattet. Die Vermaschung der Kernvermittlungsrechner ist vorteilhaft dadurch realisiert, dass alle Kernvermittlungsrechner zum Austausch der Betriebsdaten durch ein oder mehrere Glasfaserkabel untereinander verbunden sind.

Wie bereits früher ausgeführt, können die Endeinrichtungen unmittelbar oder mittelbar an die Kernvermittlungsrechner angebunden sein. Entsprechend einer möglichen Ausbildungsform sind dabei eine oder mehrere Endeinrichtungen über in den Zugriffsbereich des Netzwerks angeordnete Switches (in der Regel Layer-2-Switches) an die Kernvermittlungsrechner mittelbar angebunden. In jedem Falle ist aber auch hierbei entsprechend dem Grundprinzip der Erfindung gewährleistet, dass alle Endeinrichtungen über die Switches des Zugriffsbereichs an alle Kernvermittlungsrechner des Kernnetzes angebunden sind. Die Anbindung der Endeinrichtungen an die Kernvermittlungsrechner kann ferner unter Zwischenschaltung von Mitteln zur Datenver- und -entschlüsselung realisiert sein. Je nach den Anforderungen - nähere Ausführungen hierzu sollen im Zuge der Darstellung eines Ausführungsbeispiels erfolgen - können in dem Netzwerk Teilnetze mit mindestens zwei Endeinrichtungen und mindestens zwei Kernvermittlungsrechnern gebildet sein, die mit den übrigen Netzwerkteilen jeweils über ein Sicherheits-Gateway verbunden sind.

Entsprechend einer vorgesehenen Realisierung ist das erfindungsgemäße Netzwerk an Bord eines Schiffes implementiert. Bei den Endeinrichtungen handelt es sich in diesem Falle um Einzelgeräte oder um in einem Subnetz angeordnete Geräte der Navigation, der Schiffsautomation und der Kommunikation, um Sensoren und Effektoren beziehungsweise Aktoren sowie um Einrichtungen zur Überwachung und Steuerung der vorgenannten Komponenten. Die Kernvermittlungsrechner (Layer-3-Switches oder Core-Router) sind bei dieser Ausbildungsform des erfindungsgemäßen Netzwerks bezüglich der Schiffslängserstreckung in unterschiedlichen Abschnitten des Schiffes angeordnet. Sie sind über mindestens zwei an je einer Schiffslängsseite entlang geführte Verbindungsleitungen untereinander verbunden. Vorzugsweise sind mindestens ein Kernvermittlungsrechner im Bugbereich und ein weiterer Kernvermittlungsrechner im Heckbereich des Schiffs angeordnet. Gemäß einer Weiterbildung kann die die Implementierung an Bord eines Schiffes betreffende Ausbildungsform des erfindungsgemäßen Netzwerkes ferner Komponenten der Bordklimatisierung als Endeinrichtungen umfassen. Sofern es sich bei dem Schiff um eine schwimmende Kampfeinheit beziehungsweise um ein Schiff der Marine handelt, können die in das Netzwerk einbezogenen Endeinrichtungen außerdem Komponenten einer Bordbewaffnung umfassen.

Die Erfindung soll nachfolgend anhand von Zeichnungen mit einem Ausführungsbeispiel und im Vergleich zum Stand der Technik nochmals näher erläutert werden. In den zugehörigen Zeichnungen zeigen:
- Fig. 1:: ein grundsätzliches Schema eines erfindungsgemäßen Netzwerks,
- Fig. 2:: eine mögliche Ausbildungsform des erfindungsgemäßen Netzwerks in Form einer Implementierung an Bord eines Schiffes,
- Fig. 3:: ein Netzwerk nach dem Stand der Technik.

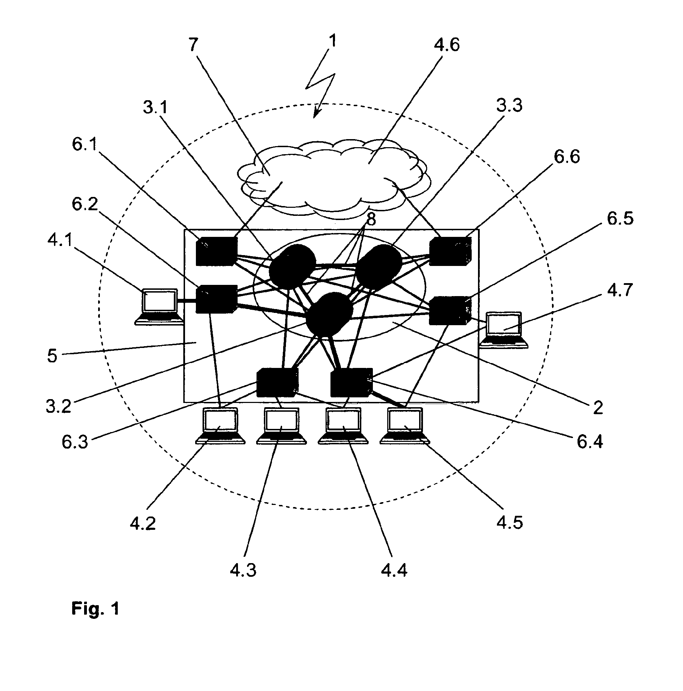

Die Fig. 1 zeigt das erfindungsgemäße Netzwerk 1 in Form eines grundsätzlichen Schemas. Das Netzwerk 1 besteht aus dem Kernnetz 2 mit den darin angeordneten Kernvermittlungsrechnern 3.1 - 3.3, dem das Kernnetz 2 umgebenden Zugriffsbereich 5 und den Endeinrichtungen 4.1 - 4.7, welche gemäß der beispielhaften Darstellung über Access-Switches (6.1 - 6.6) des Zugriffsbereichs 5 an die Kernvermittlungsrechner 3.1 - 3.3, hier sei angenommen Core-Router, angebunden sind. Wie ersichtlich, handelt es sich bei den Endeinrichtungen 4.1 - 4.7 um netzwerkfähige Endgeräte, beispielsweise Computer mit einer Netzwerkkarte, und um ein Subnetz 7, beispielsweise ein LAN. Die Anbindung der Endeinrichtungen 4.1 - 4.7 an das Kernnetz 2 ist, dem Grundgedanken der Erfindung folgend, derart, dass jede Endeinrichtung 4.1 - 4.7 über den jeweiligen Access-Switch 6.1 - 6.6 an jeden der Core-Router 3.1 - 3.3 im Kernnetz 2 angebunden ist. Innerhalb des Kernnetzes 2 ist jeder Core-Router 3.1 - 3.3 mit jedem anderen Core-Router 3.1 - 3.3 des Kernnetzes 2 durch jeweils mindestens ein hochperformantes Glasfaserkabel 8 verbunden. Die Glasfaserkabel 8 bilden einen Backbone, der bezüglich der Übertragung der Nutzdaten nicht in eine jeweilige Ende-zu-Ende-Verbindung einbezogen wird, das heißt, über welchen keine Datenpakete mit Nutzdaten geführt werden, sondern welcher lediglich dem Austausch von Betriebsdaten zwischen den Core-Routern 3.1 - 3.3 dient. Neben gegebenenfalls Daten zur Netzwerkauslastung und Qualität tauschen die Core-Router 3.1 - 3.3 über den Backbone in jedem Falle ständig ihre aktuellen Routingtabellen aus. Durch die dargestellte Struktur sind für Ende-zu-Ende-Verbindungen kurze Wege durch das Kernnetz 2 realisiert, so dass hohe Datenübertragungsraten erreicht werden, wobei dennoch durch die redundante Anbindung der Endeinrichtungen 4.1 - 4.7 an das Kernnetz 2, respektive die Core-Router 3.1 - 3.3, eine hohe Verfügbarkeit des Netzwerks 1 gewährleistet ist. Aufgrund der ständigen Synchronisation der Core-Router 3.1 - 3.3 beziehungsweise ihrer Routingtabellen wird zudem bei einem Ausfall eines Elements oder einer Einrichtung des aktuell verwendeten Übertragungsweges eine sehr schnelle Umschaltung auf einen alternativen Übertragungsweg ermöglicht.

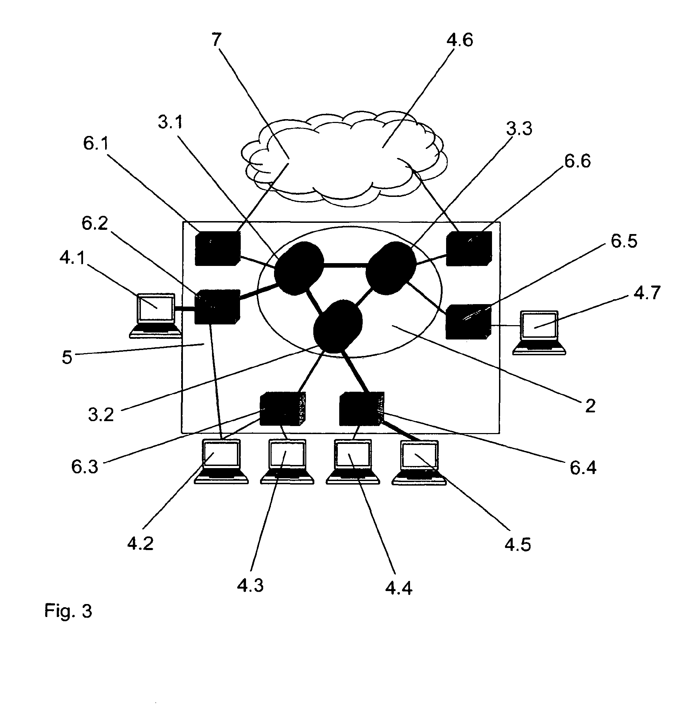

Dem zuvor beschriebenen erfinderischen Konzept stehen Netzwerke 1 des Standes der Technik mit einer Struktur gegenüber, wie sie schematisch in der Fig. 3 dargestellt ist. Die Fig. 3 zeigt die Struktur eines klassischen IP-Netzwerkes, wie sie gegenwärtig anzutreffen ist. Auch Netzwerke 1 der bekannten Art bestehen, wie aus der Fig. 3 ersichtlich, aus einem Kernnetz 2, einem Zugriffsbereich 5 und über den Zugriffsbereich 5 an das Kernnetz 2 angebundenen Endeinrichtungen 4.1 - 4.7. Im Unterschied zu der Erfindung sind bei dieser Netzwerkstruktur die Endeinrichtungen 4.1 - 4.7 jeweils nur an einige der Core-Router 3.1 - 3.3 im Kernbereich beziehungsweise Kernnetz 2 angebunden. Zwar sind auch hier die Core-Router 3.1 - 3.3 untereinander verbunden, jedoch werden über diese Verbindungen 8 notwendigerweise auch Nutzdaten übertragen. Beispielsweise erfolgen der Aufbau einer Ende-zu-Ende-Verbindung und die Übertragung von Nutzdaten zwischen der Endeinrichtung 4.1 und der Endeinrichtung 4.7 über den Access-Switch 6.2, den Core-Router 3.1, den Core-Router 3.3 und den Access-Switch 6.5. Im Falle einer Unterbrechung der direkten Verbindung zwischen den Core-Routern 3.1 und 3.3 können die Nutzdaten im Kernnetz 2 aber alternativ auch über den Core-Router 3.1, den Core-Router 3.2 und dann über den Core-Router 3.3 geführt werden. Hierdurch ist zwar eine hohe Verfügbarkeit des Netzwerkes 1 gewährleistet, jedoch erfolgt der gesamte Netzwerkverkehr bezüglich der Nutzdaten jeweils unter Einbeziehung mehrerer Core-Router 3.1, 3.2, 3.3, so dass die Performance gegenüber der erfindungsgemäßen Netzwerkstruktur geringer ist. Da außerdem bei Netzwerken der dargestellten bekannten Struktur zwischen den Core-Routern 3.1 - 3.3 kein ständiger Austausch beziehungsweise keine ständige Synchronisation der Routingtabellen erfolgt, ist zudem im Falle des Erfordernisses einer Umschaltung des Datenpfades eine größere Umschaltverzögerung zu verzeichnen.

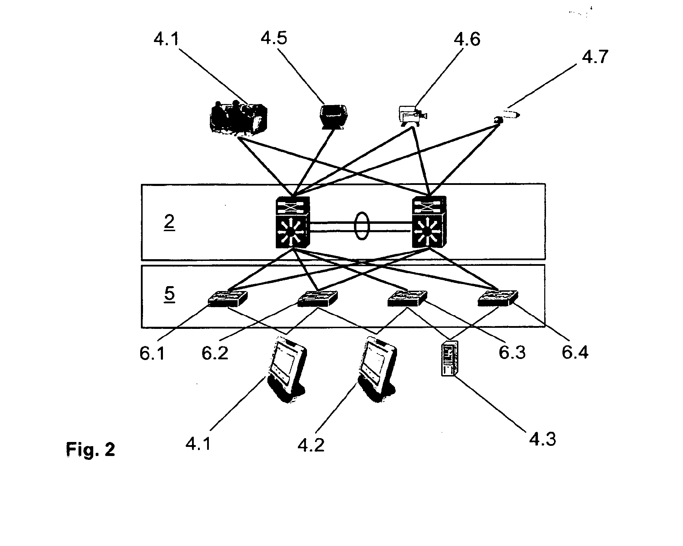

In der Fig. 2 ist nochmals ein konkretes Ausführungsbeispiel mit einer Implementierung des erfindungsgemäßen Netzwerks 1 an Bord eines Schiffes in schematischer Darstellung gezeigt. An, in dem gezeigten Beispiel, zwei Core-Router 3.1 - 3.2 oder Layer-3-Switches des Kernnetzes 2 sind mehrere Endeinrichtungen des Schiffes redundant angebunden, wobei die Darstellung beispielhaft nur einige dieser Endeinrichtungen zeigt. Die Core-Router 3.1 - 3.2 sind durch zwei oder mehr Glasfaserkabel 8 redundant miteinander verbunden. Über diesen Backbone 8 erfolgt, wie bereits mehrfach betont, nur ein Austausch von Betriebsdaten zwischen den Core-Routern 3.1 - 3.2. Alle Datenpakete mit Nutzdaten laufen hingegen jeweils von einer Endeinrichtung 4.1 - 4.7 über nur einen Core-Router 3.1 - 3.2 zu der sie jeweils empfangenden Netzwerkeinrichtung 4.1 - 4.7, welche allenfalls über einen Access-Switch 6.1 - 6.4 und nicht direkt an den betreffenden Core-Router 3.1 - 3.2 angebunden ist. In dem gezeigten Beispiel sind ein Radargerät 4.7, ein Kameraüberwachungssystem 4.6, weitere Sensoren 4.5 und ein Kommandostand 4.4 unmittelbar an die Core-Switches 3.1 - 3.2 redundant angebunden. Computerarbeitsplätze 4.1 - 4.3 zum Empfang und zur Auswertung der von den vorgenannten Endeinrichtungen 4.4 - 4.7 übermittelten Daten sind über Access-Switches 6.1 - 6.4 des Zugriffsbereichs mittelbar mit den Core-Routern 3.1 - 3.2 verbunden. Bei jeder der schematisch gezeigten Endeinrichtungen 4.1 - 4.7 kann es sich um ein einzelnes Gerät oder um ein komplexeres System, respektive ein Subnetz 7 mit mehreren gleichartigen oder miteinander interagierenden Geräten handeln. Zudem können einzelne der Endeinrichtungen 4.1 - 4.7 zu virtuellen Netzwerken zusammengefasst werden. Dies geschieht jedoch auf rein logischer und nicht auf physikalischer Ebene, so dass letztlich alle Datenpakete mit Nutzdaten jeweils über einen der beiden Core-Router 3.1 - 3.2 des Kernnetzes laufen. Die logische Trennung ermöglicht es aber, Daten zu priorisieren oder Daten, welche zwischen bestimmten virtuellen Netzen ausgetauscht werden, durch Verschlüsselung und/oder eine Einbeziehung von Sicherheits-Gateways gegenüber einem Zugriff von anderen Endeinrichtungen 4.1 - 4.7 vollständig oder teilweise abzuschirmen. So werden beispielsweise an Bord eines Schiffes Daten von Radargeräten 4.7 beziehungsweise der Schiffsnavigation mit einer höheren Priorität übertragen, als beispielsweise Daten zur Bordunterhaltung. Entsprechende Sicherheitsstrukturen können dabei so angelegt sein, dass Daten anderer Bereiche zwar von Geräten in virtuellen Netzen höherer Sicherheitsstufen empfangen werden können, aber aus den Netzen mit hoher Sicherheitsstufe keine Daten in die anderen Bereiche des Gesamtnetzwerks herausgehen. Bei dem gezeigten Beispiel kann die Systemzeit der Endgeräte 4.1 - 4.7 über das Netzwerk 1 mit einem GPS-Zeitnormal synchronisiert werden.

### Verwendete Bezugszeichen

- 1: Netzwerk
- 2: Kernnetz
- 3.1 - 3.n: Kernvermittlungsrechner, nämlich Core-Router oder Layer-3-Switch
- 4.1 - 4.n: Endeinrichtung
- 5: Zugriffsbereich
- 6.1 - 6. n: (Access-) Switch
- 7: Subnetz
- 8: Verbindungsleitung bzw. Backbone, z.B. Glasfaserkabel

## Patentansprüche

1. Verfahren zum Übertragen von Daten über paketvermittelte Ende-zu-Ende-Verbindungen in einem aus einem Kernnetz (2) mit mindestens zwei Kernvermittlungsrechnern (3.1 - 3.n) und einem das Kernnetz (2) umgebenden Zugriffsbereich (5) bestehenden Netzwerk (1), nach welchem eine Datei oder einen Datenstrom repräsentierende Nutzdaten in Form von Datenpaketen von einer die Nutzdaten aussendenden Endeinrichtung (4.1 - 4.n) über das Kernnetz (2) zu einer anderen, die Nutzdaten empfangenden Endeinrichtung (4.1 - 4.n) übertragen werden, wobei die Nutzdaten einer Datei oder eines Datenstroms über einen oder mehrere der mindestens zwei Kernvermittlungsrechner (3.1 - 3.n) geführt werden, welche anhand einer in einem jeweiligen Datenpaket enthaltenen Zieladresse einen Weg durch das Netzwerk (1) bestimmen und die Datenpakete der jeweils durch die Zieladresse bezeichneten Endeinrichtung (4.1 - 4.n) zuleiten, wobei:
a.) alle zum Netzwerk (1) gehörenden Endeinrichtungen (4.1 - 4.n) redundant an alle Kernvermittlungsrechner (3.1 - 3.n) des Kernnetzes (2) angebunden werden,
b.) jedes Datenpaket mit Nutzdaten einer Datei oder eines Datenstroms nur über einen der Kernvermittlungsrechner (3.1 - 3.n) des Kernnetzes (2) geführt wird, wobei der Datenverkehr, gesteuert durch Einheiten an oder in der jeweils Nutzdaten aussendenden Endeinrichtung (4.1 - 4.n), dynamisch auf die Kernvermittlungsrechner (3.1 - 3.n) aufgeteilt wird und
c.) die Kernvermittlungsrechner (3.1 - 3.n) über hochperformante Verbindungen (8), welche jeden Kernrechner (3.1 - 3.n) mit jedem anderen Kernrechner (3.1 - 3.n) verbinden, zumindest ihre jeweils aktuellen dynamischen Routingtabellen umfassende Betriebsdaten austauschen, wobei über diese Verbindungen (8) nur Betriebsdaten, jedoch keine Nutzdaten ausgetauscht werden.

2. Verfahren nach Anspruch 1, **dadurch gekennzeichnet, dass** die Aufteilung des Datenverkehrs nach dem Prinzip des Load Balancing mittels einer dazu von Einheiten an oder in der Nutzdaten aussendenden Endeinrichtung (4.1 - 4.n) verarbeiteten Softwareroutine gesteuert wird.

3. Verfahren nach Anspruch 1 oder 2, **dadurch gekennzeichnet, dass** die Daten in Abhängigkeit ihrer Art durch die Kernvermittlungsrechner (3.1 - 3.n) mit unterschiedlicher Priorität weitergeleitet werden.

4. Verfahren nach Anspruch 3, **dadurch gekennzeichnet, dass** die Priorisierung durch die Nutzung von Quality-of-Service-Mechanismen erfolgt.

5. Verfahren nach einem der Ansprüche 1 bis 4, bei welchem innerhalb eines technischen Systems Subnetze (7) mit Komponenten unterschiedlicher Systembereiche als Endeinrichtung (4.1 - 4.n) an die Kernvermittlungsrechner (3.1 - 3.n) des Netzwerks (1) angebunden sind, **dadurch gekennzeichnet, dass** die Nutzdaten in dem Netzwerk (1) über gleiche physikalische Wege, aber bezüglich der unterschiedlichen Systembereiche durch Definition virtueller Netze voneinander logisch getrennt übertragen werden.

6. Verfahren nach Anspruch 5, **dadurch gekennzeichnet, dass** die Nutzdaten zwischen ausgewählten virtuellen Netzen verschlüsselt übertragen werden.

7. Verfahren nach einem der Ansprüche 1 bis 5, **dadurch gekennzeichnet, dass** alle in dem Netzwerk (1) übertragenen Nutzdaten verschlüsselt übertragen werden.

8. Netzwerk (1) zur paketvermittelten Übertragung von Daten über Ende-zu-Ende-Verbindungen, bestehend aus einem Kernnetz (2) mit mindestens zwei als Hochleistungseinheiten ausgebildeten Kernvermittlungsrechnern (3.1 - 3.n), aus einem das Kernnetz (2) umgebenden Zugriffsbereich (5) und aus einer Mehrzahl über den Zugriffsbereich (5) an das Kernnetz (2) angebundenen, als netzwerkfähiges Endgerät oder als Subnetz (7) ausgebildeten Endeinrichtungen (4.1 - 4.n), wobei:
a.) jede Endeinrichtung (4.1 - 4.n) zumindest während des Bestehens einer sie einbeziehenden Ende-zu-Ende-Verbindung an jeden der mindestens zwei Kernvermittlungsrechner (3.1 - 3.n) des Kernnetzes (2) angebunden ist,
b.) an oder in den Endeinrichtungen (4.1 - 4.n) Einheiten vorgesehen sind, welche den Datenverkehr steuern und dynamisch so auf die Kernvermittlungsrechner aufteilen, dass jedes Datenpaket mit Nutzdaten einer Datei oder eines Datenstroms nur über jeweils einen der Kernvermittlungsrechner (3.1 - 3.n) des Kernnetzes (2) geführt wird,
c.) jeder Kernvermittlungsrechner (3.1 - 3.n) über mindestens eine hochperformante Verbindung (8) mit jedem anderen Kernvermittlungsrechner (3.1 - 3.n) des Kernnetzes (2) verbunden ist,
d.) die mindestens eine Verbindung (8) ausschließlich für den Austausch von Betriebsdaten, insbesondere der aktuellen dynamischen Routingtabellen der Kernvermittlungsrechner (3.1 - 3.n) vorgesehen ist.

9. Netzwerk (1) nach Anspruch 8, **dadurch gekennzeichnet, dass** es sich bei einem oder mehreren der Kernvermittlungsrechner (3.1 - 3.n) um Layer-3-Switches handelt.

10. Netzwerk (1) nach Anspruch 8 oder 9, **dadurch gekennzeichnet, dass** es sich bei einem oder mehreren der Kernvermittlungsrechner (3.1 - 3.n) um Core-Router handelt.

11. Netzwerk (1) nach Anspruch 9 oder 10, **dadurch gekennzeichnet, dass** die Kernvermittlungsrechner (3.1 - 3.n) mit einer Firewall ausgestattet sind.

12. Netzwerk (1) nach einem der Ansprüche 8 bis 11, **dadurch gekennzeichnet, dass** alle Kernvermittlungsrechner (3.1 - 3.n) zum Austausch der Betriebsdaten durch ein oder mehrere Glasfaserkabel (8) untereinander verbunden sind.

13. Netzwerk (1) nach einem der Ansprüche 8 bis 12, **dadurch gekennzeichnet, dass** ein oder mehrere Endeinrichtungen (4.1 - 4.n) über in dem Zugriffsbereich (5) angeordnete Switches (6.1 - 6.n) an jeweils mindestens zwei Kernvermittlungsrechner (3.1 - 3.n) angebunden sind.

14. Netzwerk (1) nach einem der Ansprüche 8 bis 13, **dadurch gekennzeichnet, dass** mindestens zwei Endeinrichtungen (4.1 - 4.n) unter Zwischenschaltung von Mitteln zur Datenver- und -entschlüsselung an die Kernvermittlungsrechner (3.1 - 3.n) angebunden sind.

15. Netzwerk (1) nach einem der Ansprüche 8 bis 14, **dadurch gekennzeichnet, dass** in dem Netzwerk (1) Teilnetze mit mindestens zwei Endeinrichtungen (4.1 - 4.n) und mindestens zwei Kernvermittlungsrechnern (3.1 - 3.n) gebildet sind, die mit den übrigen Netzwerkteilen jeweils über ein Sicherheitsgateway verbunden sind.

16. Netzwerk (1) nach einem der Ansprüche 8 bis 15, wobei das Netzwerk (1) an Bord eines Schiffes implementiert ist und es sich bei den Endeinrichtungen (4.1 - 4.n) um Einzelgeräte oder in einem Subnetz (7) angeordnete Geräte der Navigation, der Schiffsautomation und der Kommunikation, um Sensoren und Effektoren sowie um Einrichtungen zur Überwachung und Steuerung der vorgenannten Komponenten handelt, **dadurch gekennzeichnet, dass** die Kernvermittlungsrechner (3.1 - 3.n) bezüglich der Schiffslängserstreckung in unterschiedlichen Abschnitten des Schiffes angeordnet und über mindestens zwei an je einer Schiffslängsseite entlang geführte Verbindungsleitungen (8) untereinander verbunden sind.

17. Netzwerk (1) nach Anspruch 16, **dadurch gekennzeichnet, dass** ein Kernvermittlungsrechner (3.1) im Bugbereich und ein Kernvermittlungsrechner (3.2) im Heckbereich des Schiffs angeordnet ist.

18. Netzwerk (1) nach Anspruch 16 oder 17, **dadurch gekennzeichnet, dass** die Endeinrichtungen (4.1 - 4.n) Komponenten der Bordklimatisierung umfassen.

19. Netzwerk (1) nach einem der Ansprüche 16 bis 18, wobei das Netzwerk an Bord eines Schiffes der Marine implementiert ist, **dadurch gekennzeichnet, dass** die Endeinrichtungen (4.1 - 4.n) Komponenten einer Bordbewaffnung umfassen.

## Claims

1. Process for transmitting data via packet-switched end-to-end connections in a network (1) consisting of a core network (2), with at least two core switching computers (3.1 - 3.n), and of an access area (5) surrounding the core network (2), by which useful data representing a file or a data stream, in the form of data packets, are transmitted over the core network (2) from a terminal device (4.1 - 4.n) emitting the useful data to another terminal device (4.1 - 4.n) receiving the useful data, whereby the useful data of a file or of a data stream are routed via one or more of the at least two core switching computers (3.1 - 3.n) which on the basis of a destination address contained in a respective data packet determine a path through the network (1) and supply the data packets to the terminal device (4.1 - 4.n) designated respectively by the destination address, wherein
a.) all the terminal devices (4.1 - 4.n) appertaining to the network (1) are redundantly linked up to all the core switching computers (3.1 - 3.n) of the core network (2),
b.) each data packet with useful data of a file or of a data stream is routed via one of the core switching computers (3.1 - 3.n) of the core network (2), whereby the data traffic, controlled by units on or in the terminal device (4.1 - 4.n) respectively emitting useful data, is dynamically partitioned to the core switching computers (3.1 - 3.n) and
c.) the core switching computers (3.1 - 3.n) exchange, via high-performance connections (8) which connect each core computer (3.1 - 3.n) to each other core computer (3.1 - 3.n), at least their respectively current dynamic operating data including routing tables, whereby only operating data, but no useful data, are exchanged via these connections (8).

2. Process according to Claim 1, **characterised in that** the partitioning of the data traffic is controlled in accordance with the principle of load balancing by means of software which is processed for this purpose by units on or in the terminal device (4.1 - 4.n) emitting useful data.

3. Process according to Claim 1 or 2, **characterised in that** the data are relayed with differing priorities, in a manner depending on their type, by the core switching computers (3.1 - 3.n).

4. Process according to Claim 3, **characterised in that** the prioritisation is undertaken through the use of quality-of-service mechanisms.

5. Process according to one of Claims 1 to 4, wherein, within a technical system, subnetworks (7) with components of differing system areas by way of terminal device (4.1 - 4.n) have been linked up to the core switching computers (3.1 - 3.n) of the network (1), **characterised in that** the useful data in the network (1) are transmitted via the same physical paths but, with respect to the differing system areas, logically separated from one another by definition of virtual networks.

6. Process according to Claim 5, **characterised in that** the useful data are transmitted in encrypted manner between selected virtual networks.

7. Process according to one of Claims 1 to 5, **characterised in that** all the useful data transmitted in the network (1) are transmitted in encrypted manner.

8. Network (1) for packet-switched transmission of data via end-to-end connections, consisting of a core network (2) with at least two core switching computers (3.1 - 3.n) designed as high-performance units, of an access area (5) surrounding the core network (2), and of a plurality of terminal devices (4.1 - 4.n) linked up to the core network (2) via the access area (5) and designed as networkable terminal equipment or as a subnetwork (7), whereby
a.) each terminal device (4.1 - 4.n) has been linked up, at least during the existence of an end-to-end connection incorporating it, to each of the at least two core switching computers (3.1 - 3.n) of the core network (2),
b.) units have been provided on or in the terminal devices (4.1 - 4.n), which control the data traffic and partition it dynamically to the core switching computers in such a way that each data packet is routed with useful data of a file or of a data stream only via, in each instance, one of the core switching computers (3.1 - 3.n) of the core network (2),
c.) each core switching computer (3.1 - 3.n) has been connected to each other core switching computer (3.1 - 3.n) of the core network (2) via at least one high-performance connection (8),
d.) the at least one connection (8) has been provided exclusively for the exchange of operating data, in particular the current dynamic routing tables of the core switching computers (3.1 - 3.n).

9. Network (1) according to Claim 8, **characterised in that** in the case of one or more of the core switching computers (3.1 - 3.n) it is a question of Layer-3 switches.

10. Network (1) according to Claim 8 or 9, **characterised in that** in the case of one or more of the core switching computers (3.1 - 3.n) it is a question of core routers.

11. Network (1) according to Claim 9 or 10, **characterised in that** the core switching computers (3.1 - 3.n) have been equipped with a firewall.

12. Network (1) according to one of Claims 8 to 11, **characterised in that** all the core switching computers (3.1 - 3.n) have been interconnected by one or more glass-fibre cables (8) for the exchange of the operating data.

13. Network (1) according to one of Claims 8 to 12, **characterised in that** one or more terminal devices (4.1 - 4.n) have been linked up to, in each instance, at least two core switching computers (3.1 - 3.n.) via switches (6.1 - 6.n) arranged in the access area (5).

14. Network (1) according to one of Claims 8 to 13, **characterised in that** at least two terminal devices (4.1 - 4.n) have been linked up to the core switching computers (3.1 - 3.n), with interposition of means for data encryption and data decryption.

15. Network (1) according to one of Claims 8 to 14, **characterised in that** subnets with at least two terminal devices (4.1 - 4.n) and with at least two core switching computers (3.1 - 3.n) have been formed in the network (1), which have been connected to the remaining parts of the network in each instance via a security gateway.

16. Network (1) according to one of Claims 8 to 15, wherein the network (1) has been implemented on board a ship and in the case of the terminal devices (4.1 - 4.n) it is a question of stand-alone devices or devices, arranged in a subnetwork (7), for navigation, ship automation and communication, of sensors and effectors, and also of devices for monitoring and controlling the aforementioned components, **characterised in that** the core switching computers (3.1 - 3.n) have been arranged in differing sectors of the ship with respect to the longitudinal extent of the ship, and have been interconnected via at least two connecting lines (8) routed along, in each case, a longitudinal side of the ship.

17. Network (1) according to Claim 16, **characterised in that** a core switching computer (3.1) has been arranged in the bow region and a core switching computer (3.2) has been arranged in the stern region of the ship.

18. Network (1) according to Claim 16 or 17, **characterised in that** the terminal devices (4.1 - 4.n) include components for on-board air conditioning.

19. Network (1) according to one of Claims 16 to 18, wherein the network has been implemented on board a ship of the navy, **characterised in that** the terminal devices (4.1 - 4.n) include components of on-board weaponry.

## Revendications

1. Procédé de transmission de données par l'intermédiaire de liaisons à commutation de paquets de bout en bout dans un réseau (1) constitué d'un coeur de réseau (2) comportant au moins deux calculateurs de commutation d'infrastructure (3.1 - 3.n) et un domaine d'accès (5) entourant le coeur de réseau (2), conformément auquel des données d'utilisateurs représentant un fichier ou un flux de données sous forme de paquets de données sont transmises par l'intermédiaire du coeur de réseau (2) par un équipement terminal (4.1 - 4.n) émettant les données d'utilisateurs, à un autre équipement terminal (4.1 - 4.n) recevant les données d'utilisateurs, dans lequel les données d'utilisateurs d'un fichier ou d'un flux de données sont acheminées par l'intermédiaire de l'un ou de plusieurs des au moins deux calculateurs de commutation d'infrastructure (3.1 - 3.n) qui déterminent un trajet à travers le réseau (1) sur la base d'une adresse cible contenue dans un paquet de données respectif et envoient le paquet de données à l'équipement terminal (4.1 - 4.n) respectif désigné par l'adresse cible, dans lequel
a) tous les équipements terminaux (4.1 - 4.n) appartenant au réseau (1) sont raccordés de manière redondante à tous les calculateurs de commutation d'infrastructure (3.1 - 3.n) du coeur de réseau (2),
b) chaque paquet de données contenant des données d'utilisateurs d'un fichier ou d'un flux de données n'est acheminé que par l'intermédiaire de l'un des calculateurs de commutation d'infrastructure (3.1 - 3.n) du coeµr de réseau (2), dans lequel le trafic de données est segmenté, de manière dynamique sur les calculateurs de commutation d'infrastructure (3.1 - 3.n) et de manière commandée par des unités se trouvant sur ou dans l'équipement terminal (4.1 - 4.n) respectif émettant des données d'utilisateurs, et
c) les calculateurs de commutation d'infrastructure (3.1 - 3.n) échangent au moins leurs données de fonctionnement comprenant des tables de routage dynamiques actuelles par l'intermédiaire de liaisons à hautes performances (8) qui relient chaque calculateur de commutation d'infrastructure (3.1 - 3.n) à chaque autre calculateur de commutation d'infrastructure (3.1 - 3.n), dans lequel seules sont échangées par l'intermédiaire desdites liaisons (8) des données de fonctionnement et non pas des données d'utilisateurs.

2. Procédé selon la revendication 1, **caractérisé en ce que** la segmentation du trafic de données est commandée conformément au principe d'équilibrage de la charge au moyen d'un sous-programme logiciel traité à cet effet par des unités se trouvant sur ou dans l'équipement terminal (4.1 - 4.n) émettant des données d'utilisateurs.

3. Procédé selon la revendication 1 ou 2, **caractérisé en ce que** les données sont réacheminées en fonction de leur type avec des priorités différentes par l'intermédiaire des calculateurs de commutation d'infrastructure (3.1 - 3.n).

4. Procédé selon la revendication 3, **caractérisé en ce que** l'établissement des priorités est effectué par utilisation de mécanismes de qualité de service.

5. Procédé selon l'une quelconque des revendications 1 à 4, dans lequel des sous-réseaux (7) comportant des composants de divers domaines du système en tant qu'équipement terminal (4.1 - 4.n) sont connectés aux calculateurs de commutation d'infrastructure (3.1 - 3.n) du réseau (1) au sein d'un système technique, **caractérisé en ce que** les données d'utilisateurs sont transmises dans le réseau (1) par l'intermédiaire de trajets physiques identiques mais de manière logiquement séparée les uns des autres par rapport aux divers domaines du système par définition de réseaux virtuels.

6. Procédé selon la revendication 5, **caractérisé en ce que** les données d'utilisateurs sont transmises de manière cryptée entre des réseaux virtuels sélectionnés.

7. Procédé selon l'une quelconque des revendications 1 à 5, **caractérisé en ce que** toutes les données d'utilisateurs sont transmises de manière cryptée dans le réseau (1).

8. Réseau (1) destiné à transmettre par commutation de paquets des données par l'intermédiaire de liaisons de bout en bout, constituée d'un coeur de réseau (2) comportant au moins deux calculateurs de commutation d'infrastructure (3.1 - 3.n) réalisés sous la forme d'unités de forte puissance, d'un domaine d'accès (5) entourant le coeur de réseau (2) et d'une pluralité d'équipements terminaux (4.1 - 4.n) raccordés au coeur de réseau (2) par l'intermédiaire du domaine d'accès (5), et réalisés sous la forme d'un terminal compatible avec le réseau ou d'un sous-réseau (7), dans lequel
a) chaque équipement terminal (4.1 - 4.n) est raccordé à chacun des au moins deux calculateurs de commutation d'infrastructure (3.1 - 3.n) du coeur de réseau (2) au moins pendant l'existence d'une liaison de bout en bout qu'il comporte,
b) il est prévu sur ou dans les équipements terminaux (4.1 - 4.n) des unités qui commandent le trafic de données et le segmentent dynamiquement sur les calculateurs de commutation d'infrastructure de manière à ce que chaque paquet de données comportant des données d'utilisateurs d'un fichier ou d'un flux de données ne soit acheminé que par l'intermédiaire de l'un respectif des calculateurs de commutation d'infrastructure (3.1 - 3.n) du coeµr de réseau (2),
c) chaque calculateur de commutation d'infrastructure (3.1 - 3.n) est relié par l'intermédiaire d'une liaison à hautes performances (8) à chaque autre calculateur de commutation d'infrastructure (3.1 - 3.n) du coeµr de réseau (2),
d) l'au moins une liaison (8) est exclusivement prévue pour l'échange de données de fonctionnement, notamment des tables de routage dynamiques actuelles des calculateurs de commutation d'infrastructure (3.1 - 3.n).

9. Réseau (1) selon la revendication 8, **caractérisé en ce que** l'un ou plusieurs des calculateurs de commutation d'infrastructure (3.1 - 3.n) est/sont des commutateurs de couche 3.

10. Réseau (1) selon la revendication 8 ou 9, **caractérisé en ce que** l'un ou plusieurs des calculateurs de commutation d'infrastructure (3.1 - 3.n) est/sont des routeurs d'infrastructure.

11. Réseau (1) selon la revendication 9 ou 10, **caractérisé en ce que** les calculateurs de commutation d'infrastructure (3.1 - 3.n) sont munis d'un pare-feu.

12. Réseau (1) selon l'une quelconque des revendications 8 à 11, **caractérisé en ce que** tous les calculateurs de commutation d'infrastructure (3.1 - 3.n) sont reliés les uns aux autres pour l'échange des données de fonctionnement par un ou plusieurs câbles à fibres optiques (8).

13. Réseau (1) selon l'une quelconque des revendications 8 à 12, **caractérisé en ce qu'**un ou plusieurs équipements terminaux (4.1 - 4.n) sont respectivement raccordés à au moins deux calculateurs de commutation d'infrastructure (3.1 - 3.n) par l'intermédiaire de commutateurs (6.1 - 6.n) disposés dans le domaine d'accès (5).

14. Réseau (1) selon l'une quelconque des revendications 8 à 13, **caractérisé en ce qu'**au moins deux équipements terminaux (4.1 - 4.n) sont respectivement raccordés aux calculateurs de commutation d'infrastructure (3.1 - 3.n) par interposition de moyens de cryptage et de décryptage de données.

15. Réseau (1) selon l'une quelconque des revendications 8 à 14, **caractérisé en ce que** des réseaux partiels comportant au moins deux équipements terminaux (4.1 - 4.n) et au moins deux calculateurs de commutation d'infrastructure (3.1 - 3.n) qui sont respectivement reliés par l'intermédiaire d'une passerelle sécurisée aux réseaux partiels restants, sont formés dans le réseau (1).

16. Réseau (1) selon l'une quelconque des revendications 8 à 15, dans lequel le réseau (1) est mis en oeuvre à bord d'un navire et les équipements terminaux (4.1 - 4.n) sont des appareils autonomes ou des appareils de navigation, d'automatisation des navires et de communication, disposés dans un sous-réseau (7), des capteurs et des effecteurs, ainsi que des dispositifs destinés à surveiller et commander lesdits composants, **caractérisé en ce que** les calculateurs de commutation d'infrastructure (3.1 - 3.n) sont disposés dans différentes parties du navire dans la direction longitudinale du navire et sont reliés les uns aux autres par l'intermédiaire d'au moins deux lignes de connexion (8) passant le long de chaque côté du navire.

17. Réseau (1) selon la revendication 16, **caractérisé en ce qu'**un calculateur de commutation d'infrastructure (3.1) est disposé dans la région de proue et **en ce qu'**un calculateur de commutation d'infrastructure (3.2) est disposé dans la région de poupe du navire.

18. Réseau (1) selon la revendication 16 ou 17, **caractérisé en ce que** les équipements terminaux (4.1 - 4.n) comprennent des composants du système de climatisation de bord.

19. Réseau (1) selon l'une quelconque des revendications 16 à 18, dans lequel le réseau est mis en oeuvre à bord d'un navire de la marine, **caractérisé en ce que** les équipements terminaux (4.1 - 4.n) comprennent des composants d'un système d'armes de bord.
